# EUROPEAN PATENT SPECIFICATION

(11) **EP 0 802 356 B1**
(45) Date of publication and mention of the grant of the patent: **07.11.2001**
(21) Application number: 97106243.5
(22) Date of filing: 16.04.1997
(51) Int. Cl.: F16H 61/28, B60K 41/22

(54) **An electro-hydraulic device for controlling a servo-actuated gearbox**
Elektrohydraulische Einrichtung zum Schalten eines servobetätigten Schaltgetriebes
Dispositif électrohydraulique pour commander les servo-actionneurs d'une boîte de vitesses

(30) Priority: 19.04.1996 IT TO960306
(43) Date of publication of application: 22.10.1997
(73) Proprietor: C.R.F. Società Consortile per Azioni, 10043 Orbassano (TO) (IT)
(72) Inventor: Mesiti, Domenico, 10040 Leini' (Torino) (IT); Garabello, Marco, 10060 Scalenghe (Torino) (IT); Caenazzo, Dario, 10060 Scalenghe (TO) (IT)
(74) Representative: Di Francesco, Gianni

(56) References cited:
- EP-A- 0 477 564
- DE-A- 4 320 353
- GB-A- 2 214 248
- US-A- 3 808 903
- US-A- 3 818 776

## Description

The present invention relates to an electro-hydraulic device for controlling a servo-actuated gearbox coupled to a hydraulic clutch by means of a master cylinder, wherein a pressurised fluid is used as working fluid for driving the actuators of the gearbox control shaft.

The above kind of servo-controlled gearboxes, as known to the motor-car industry, make use of two proportional .electro-valves for the part concerning the gear engagement through the gearbox control shaft. Said valves are normally controlled by an electronic processing unit in accordance with the signals from sensors mounted on the vehicle and by the driver's controls.

The use of proportional valves is in practice necessary, as the thrust exerted by the control shaft and its relevant fork is transmitted completely to the synchronisation ring. In the case of exceedingly high thrusts occurring, this ring would surely suffer some damage. Similarly, a proportional electro-valve is also used for controlling the hydraulic clutch master cylinder, while use on-off valves is known for controlling the selecting actuator.

Such a type of servo-controlled transmission using proportional valves is disclosed in EP 477564 which shows the features of the preamble of claim 1, and in GB 2214248.

Although the use of these solenoid valves of proportional kind on one hand resolves problems as to the reliability and lifetime of the gearbox, on the other hand it involves considerably higher production costs. In fact, proportional valves are remarkably more costly than the more simple on-off valves, which could instead be used if synchronisers were not employed.

It is an object of the present invention to overcome the above prior art disadvantages.

This and other objects are achieved in accordance with the present invention by an electro-hydraulic device for controlling a mechanical servo-controlled motorcar gearbox, as claimed in claim one.

The advantages and features of the present invention will become readily apparent to those skilled in the art from a study of the following description of an exemplary preferred embodiment when read in conjunction with the attached drawings and appended claims. In the drawings:
- FIG. 1: is an is overall schematic view of the electro-hydraulic device for controlling a gearbox in accordance with the present invention;
- FIG. 2: is a sectional view of the actuator group mounted on the gear box, on the side of the gear engaging actuator, integrated with four on-off solenoid valves, two for gear engagement and two for gear selection;
- FIG. 3: is a sectional view of a second embodiment of the solenoid valves shown in FIG. 2;
- FIGS. 4 to 7: illustrate various working positions of the on-off solenoid valves connected to the gear selection actuator in the arrangement shown in FIG. 2.

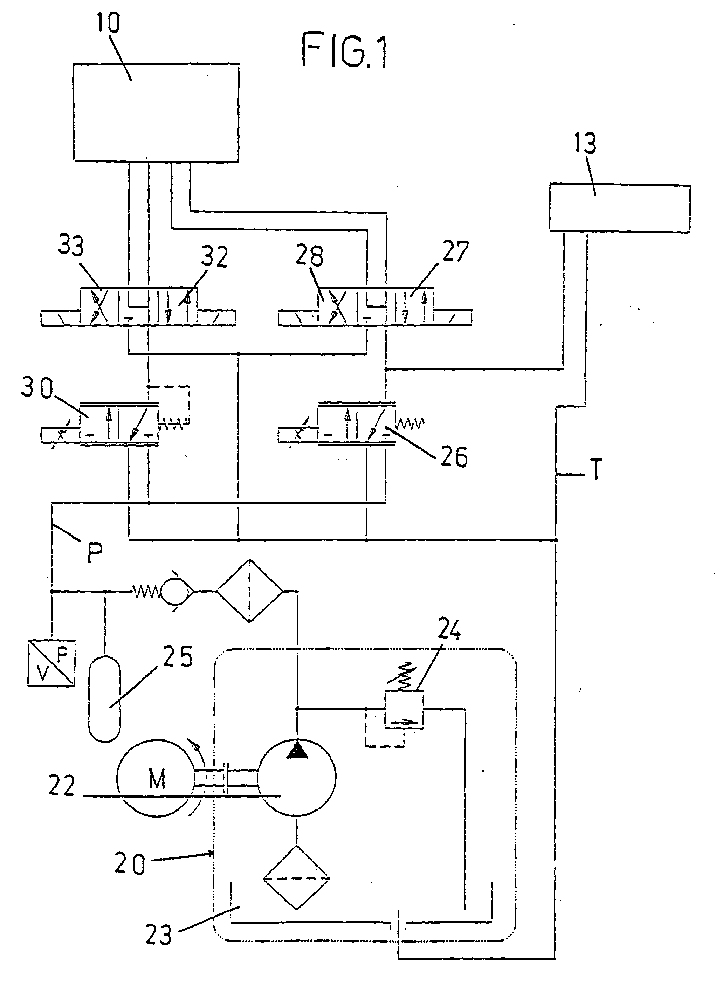

In FIG. 1 there is shown as a whole the gearbox and clutch actuating device, controlled by an electronic processing unit (not shown) receiving signals form a number of sensors fitted on board of the vehicle, e.g. on the brake or the accelerator.

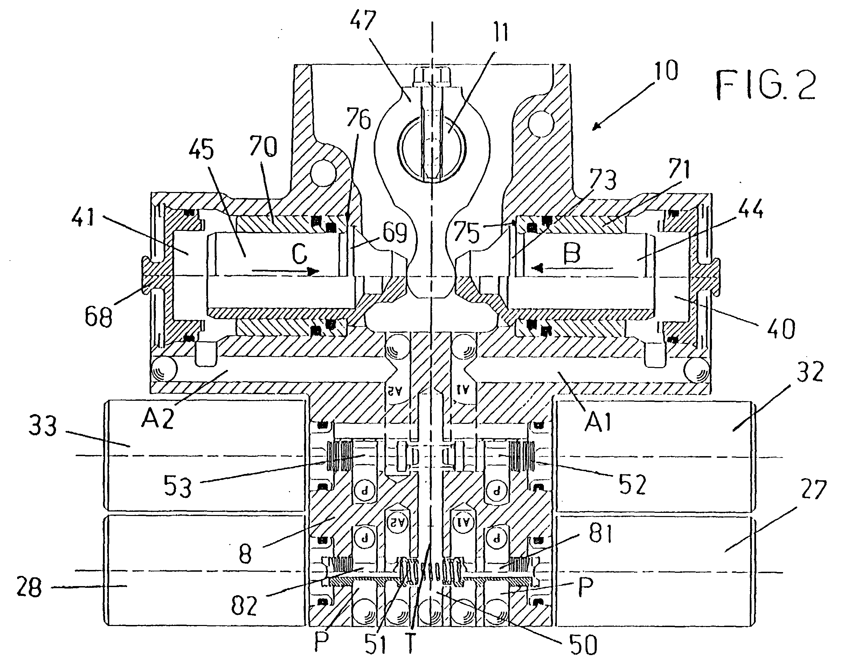

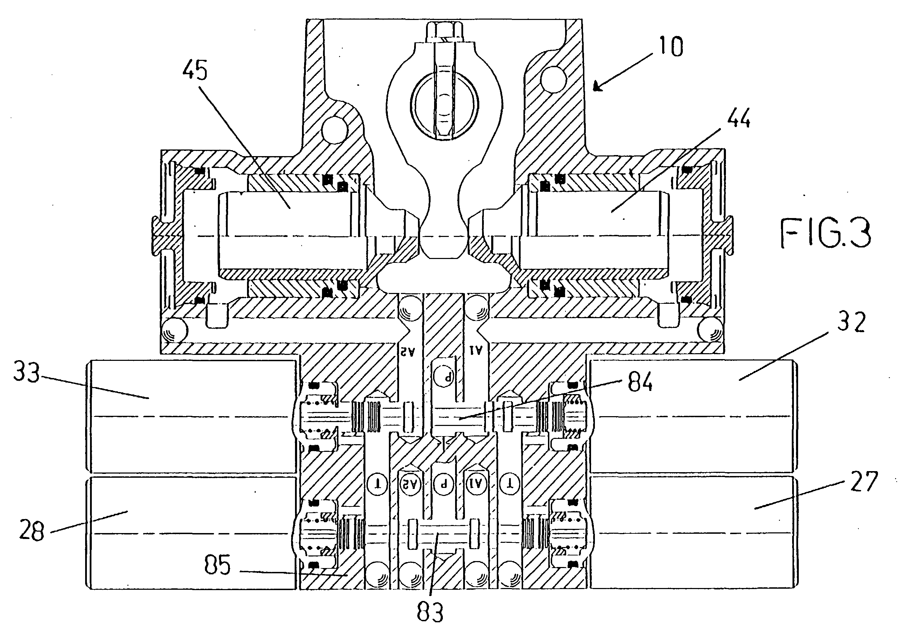

The device comprises, amongst others, a hydraulic actuator unit 10 incorporating both the actuator (not shown) for selecting gears through the gearbox control shaft 11 (shown in FIGS. 2 and 3) and the actuator (not shown) for gear engagement, still by means of control shaft 11. The pressurised fluid for driving the actuators is supplied by an electro-hydraulic power unit 20. Power unit 20 consists of a motor-driven pump 22 with a reservoir 23. An overpressure valve 24 is provided for limiting excessively high pressure due to anomalous operation.

The motor-driven pump 22 supplies an accumulator 25 with pressurised fluid through a non-return valve.

According to the present invention, the inflow of pressurised fluid to the actuator unit 10 and therefore to the first gear selection actuator and the second gear engagement actuator and the actuator of clutch 13 is provided from the accumulator 25 along line P. Outflow take place along line T. In accordance with the invention, inflow and outflow are both controlled by an electronic processing unit (not shown) through first and second proportional solenoid valves, 26, 30, respectively. The first solenoid valve 26, for the gear selection actuator, is a two-position three-way solenoid valve disposed upstream of a first set of on-off solenoid valves 27 and 28. The second solenoid valve 30, for the gear engagement actuator, is fitted upstream of a second set of on-off solenoid valves 32 and 33. The first proportional solenoid valve 26 is further adapt for controlling inflow of pressurised fluid to the cylinder actuating the clutch 13. It should be noticed that the solenoid valve 30 is a proportional pressure solenoid valve.

The proportional solenoid valves 26 and 30 allow the pressurised fluid passage form the accumulator 25 to the respective on-off solenoid valves 27, 28, 32 and 33 in a manner proportional to the control current, or, interrupt the pressurised fluid connection simultaneously setting the on-off solenoid valves in fluid communication with the relief line T. Owing to this, the circuit will be almost entirely in a relieved condition when not using the servo-control. This reduces blow-by flow loss at the valves; flow loss will be limited to the proportional valves only.

Depending on their condition of excitation, the two on-off solenoid valves 32 and 33 associated with the engagement actuator provide three different connection arrangements of pressurised and relief lines P and T, respectively, with two chambers 40, 41 obtained within actuator 10 wherein two first pistons 44, 45 (FIGS. 2 and 3) are provided. Pistons 44, 45 act on shaft 11 through a finger element 47. Two conduits A1, A2 formed in the body of actuator 10 connect chambers 40 and 41 with a chamber 50 within which two spool members 52 and 53 of solenoid valves 32 and 33 are moved against the bias of a spring mounted between their ends. It can be observed that the inlet of the pressurised line is single in the common body of the solenoid valves, and then splits up within the body and serves both the solenoid valves.

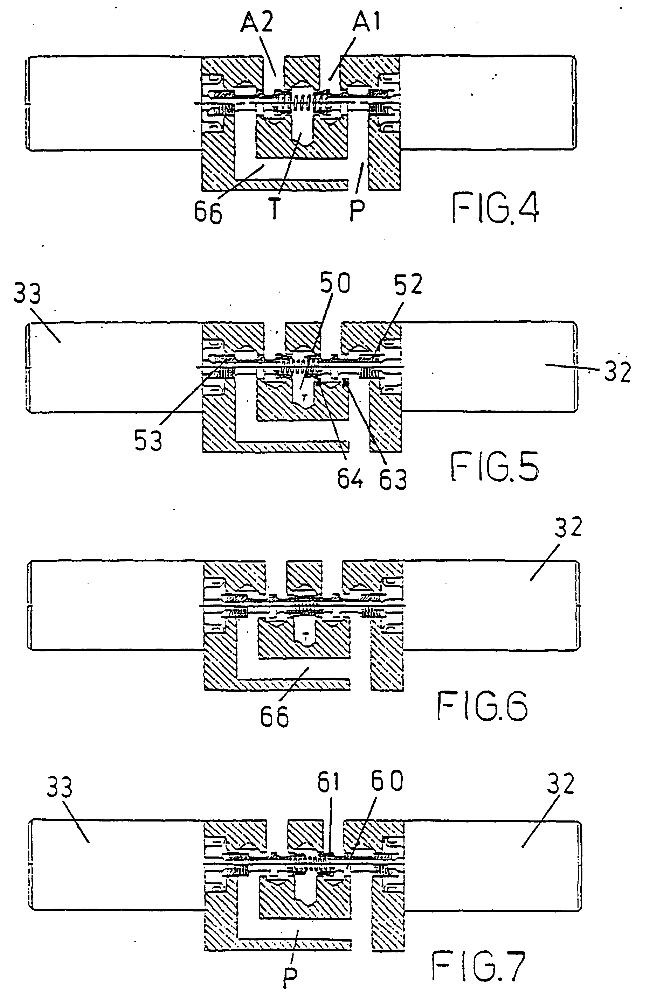

Referring to FIGS. 4 to 7, there will be illustrated the various positions of the spool members 52 and 53 of solenoid valves 32 and 33 providing gear selection and engagement.

In the position of FIG. 4, the two solenoid valves 32 and 33 are at rest; the passages between the pressurised conduit P and conduits A1 and A2 are closed, and said conduits are in a relieved condition through line T. This is allowed also due to the particular shape of spool members 52 and 53 which are symmetrical. Spool members 52, 53 each have two annular sealing protrusions 60, 61 for co-operating with respective first and second circular seats 63, 64 formed in chamber 50.

The first seats 63 of said sets are adapted for separating, co-operating with protrusions 60, the pressurised line P from conduits A1 and A2, respectively. The second seats 64, co-operating with said sealing protrusions 61, separate conduits A1 and A2 from the relief line T.

As said, in the rest position the protrusions 60 are inserted in their respective seats 63, while the annular protrusions 61 are out of their respective seats 64 and leave the fluid communication open between the conduits A1 and A2 and the relief line T.

Upon exciting one of the two solenoid valves 32, 33, for instance solenoid valve 32, the second annular protrusion 61 moves to the corresponding second seat 64, thereby opening the passage for the pressurised fluid of line P to conduit A1 (FIG. 5), while conduit A2 remains in a relieved condition. This causes pressurisation of the corresponding chamber 40, translation of piston 44 in the direction of arrow B of FIG. 2 and the relevant actuation of gearbox control shaft 11. This causes engagement of the previously selected gear.

As the chamber 41 is relieved, piston 45 will therefore be urged in the direction opposite to that of arrow C.

As shown in FIG. 2, a shoulder 69 of piston 45 drives a second annular piston 70 coaxial thereto and sealingly sliding in said chamber 41 and on piston 45. An annular second piston 71 is sealingly fitted in chamber 40 slidingly surrounding piston 44. The latter can drive annular piston 71 in its motion in the direction opposite to that of arrow B by way of a shoulder 73.

Upon exciting the second solenoid valve 33, the second spool member 53 is moved. The second annular protrusion 61 is moved to the second seat 64, thereby opening the passage for the pressurised fluid of line P to conduit A2 (FIG. 7), while conduit A1 remains in a relieved condition. This causes pressurisation of the corresponding chamber 41, which causes piston 45 to shift in the direction of arrow C of FIG. 2 and provokes the relevant rotation of gearbox control shaft 11. This causes engagement of the previously selected gear.

FIG. 4 shows the two spool members 52 and 53 pressed one against the other in the position reached when the solenoid valves are both excited simultaneously.

In this arrangement, both chambers 40 and 41 are pressurised, while the relief T is closed.

It should be noted that by means of the two coaxial pistons, a perfectly centred neutral position of the shaft 11 is attained. This position is reached from one of the two end positions of the gear actuator, when a gear is engaged. For example, in this position the piston 45 is completely translated towards the cap 68 driving also piston 70 with it through shoulder 69. When the passage between the pressurised line P and conduit A2 is opened by solenoid valve 33 (FIG. 6), to reach the above neutral position, the same pressure already existing in chamber 40 is also created in chamber 41, and the two conduits A1 and A2 are set in fluid communication with each other through a bypass connection conduit 66. However, owing to the fact that the area on which the pressure of chamber 41 acts is given by the sum of the sectional areas of pistons 45 and 70, these pistons will translate in the direction of arrow C, overcoming the resistance of piston 44 which has a lower thrust behind it. In fact, the pressure of chamber 40 acts solely on the area corresponding to the section of the piston 44 itself, as piston 71 is abutting a shoulder 75 formed in the body of actuator 10 at the inner edge of chamber 40.

As apparent from the drawings, the pistons 45 and 70 will translate in the direction of arrow C until piston 70 abuts against a shoulder 76. Shoulder 76 is formed at the inner end of chamber 41 and is symmetrical to shoulder 75. Owing to the facts that the conduits A1 and A2 are in fluid communication therebetween by means of conduit 66 (as also schematically illustrated in FIG. 1), movement of pistons 45 and 70 allows for the transfer of a portion of the pressurised fluid from chamber 41 to chamber 40, substantially halving the rate of flow required by the proportional solenoid valve 30.

Once in this position, the pistons 44 and 45 stop their motion as the thrusts exerted in the two chambers 40, 41 on equal areas, are equal themselves. In this way the neutral position of the gear control shaft 11 is reached rapidly, disengaging the previously engaged gear.

As to the operation of on-off solenoid valves 27 and 28 for controlling operation of the gear selection actuator incorporated in unit 10, these valves work in a conventional manner. Through the spool members 81 and 82 (FIG. 2), on-off solenoid valves 27 and 28 allow for pressurised fluid passage into the first or second chamber of the actuator, or in both, so as to permit attainment of the various selection levels corresponding to the various groups of gears.

As stated above, the first proportional solenoid valve has also the function of controlling the pressurised fluid supplied to the clutch actuating cylinder. Clearly, as the first set of on-off valves 27 and 28 is downstream of the first proportional solenoid valve, the selection will not take place if the clutch control function will not have been activated first by the electronic processing unit. This provision allows to keep the parts downstream of the proportional valve in a relieved condition also in this case. As a result, blow-by loss of flow will be reduced when the servo-control is in a resting condition.

In FIG. 3 there is illustrated a second embodiment of the solenoid valves 27, 28, 32 and 33, still in accordance with the scope of the present invention. In particular, the spool members 52 and 53, as well as the spool members 81 and 82, are joined in a single spool member 83, 84, while the inflow and outflow lines P and T, respectively, are reversed. However, the operation of the valves and consequently that of the actuators of unit 10 is identical to what previously described with reference to the first embodiment.

It will be noticed that in the various embodiments of the invention, the actuator unit and the hydraulic part of the on-off solenoid valves are incorporated in a single body 85, so as to reduce considerably the overall size and the machining required. This object is also attained by the particular shape of the valves.

Further, the device of this invention provides other advantages, such as an improved strength of the device as a whole by virtue of the use of on-off valves. The proportional power required to the central processing unit in various steps is also reduced. Finally, a reduction of the loss of flow is achieved owing to the fact that most of the components are hydraulically supplied only during the gear shifting steps. As a result, the number of insertions required by the electro-hydraulic supplying unit can also be reduced.

## Claims

1. An electro-hydraulic device for controlling a mechanical servo-actuated motorcar gearbox, wherein a pressurised fluid is used as working fluid, the device comprising a hydraulic control for the clutch by means of an actuator and two single actuators, one for selecting the gears and the other for engaging the gears, said actuators being controlled by an electronic processing unit for driving the gearbox control shaft (11) responsive to signals from sensor means fitted on the vehicle, the pressurised fluid control circuit for operating the actuators (10, 13) comprising a first proportional three-way two-position solenoid valve (26) disposed upstream of a first set of two on-off solenoid valves (27, 28); **characterised in that** a second proportional pressure solenoid valve (30) is disposed upstream of a second set of two on-off solenoid valves (32, 33), and **in that** said first proportional solenoid valve (26) also controls the clutch actuator (13).

2. A device as claimed in claim 1, **characterised in that** the proportional solenoid valves control inflow and outflow of the pressurised fluid to and from the on-off solenoid valves (27, 28, 32, 33).

3. A device as claimed in claim 1, **characterised in that** the inflow pressure line (P) between the proportional solenoid valve (30) and the body (85) of the second set of on-off solenoid valves (32, 33) is a single line and that within said body (85) there is provided a conduit (66) connecting said line to each on-off solenoid valve (32, 33).

4. A device as claimed in claim 1, **characterised in that** the hydraulic part of the on-off solenoid valves (32, 33) for controlling the gear engagement actuator has a common chamber (50) connected to the relief line (T) and the chambers (40, 41) of said gear engagement actuator, said chamber (50) having circular seats (63, 64) for controlling connection between said two chambers (40, 41) and said relief line (T) depending on the relative position reached by annular protrusions (60, 61) formed on at least one spool member (52) inserted in said chamber (50) and driven by the electromagnets of said solenoid valves (32, 33).

5. A device as claimed in claim 4, **characterised in that** there are two spool members (52, 53) spaced by an elastic member (51) interposed between the inner ends of said spool members (52, 53).

## Patentansprüche

1. Elektrohydraulische Vorrichtung zum Steuern eines mechanischen, servobetätigten Schaltgetriebes von Kraftfahrzeugen, wobei eine Druckflüssigkeit als Arbeitsmedium verwendet wird, wobei die Vorrichtung eine hydraulische Steuerung für die Kupplung mittels eines Betätigungselements und zweier einzelner Betätigungselemente umfaßt, eines zum Auswählen der Gänge und das andere zum Eingreifen der Gänge, wobei die Betätigungselemente durch eine elektronische Verarbeitungseinheit zum Antrieb der Steuerwelle (11) des Schaltgetriebes gesteuert werden, die auf Signale von Sensormitteln anspricht, die im Fahrzeug eingebaut sind, und der Druckflüssigkeitssteuerkreis zum Betreiben der Betätigungselemente (10, 13) ein erstes elektromagnetisches Dreiweg-Aus-Zu-Proportionalventil, das vor einem ersten Satz von zwei Schaltventilen (27, 28) eingerichtet ist, umfaßt, **dadurch gekennzeichnet, daß** ein zweites elektromagnetisches Proportionaldruckventil (30) vor einem zweiten Satz von zwei elektromagnetischen Schaltventilen (32, 33) eingerichtet ist und daß das erste elektromagnetische Proportionalventil (26) auch das Kupplungsbetätigungselement (13) steuert.

2. Vorrichtung nach Anspruch 1, **dadurch gekennzeichnet, daß** die elektromagnetischen Ventile die Ein- und Ausströmung der Druckflüssigkeit zu und von den elektromagnetischen Schaltventilen (27, 28, 32, 33) steuern.

3. Vorrichtung nach Anspruch 1, **dadurch gekennzeichnet, daß** die Einströmungsdruckleitung (P) zwischen dem elektromagnetischen Proportionalventil (30) und dem Gehäuse (85) des zweiten Satzes von elektromagnetischen Schaltventilen (32, 33) eine einfache Leitung ist und daß innerhalb des Gehäuses (35) ein Kanal (66) vorgesehen ist, der die Leitung mit jedem elektromagnetischen Schaltventil (32, 33) verbindet.

4. Vorrichtung nach Anspruch 1, **dadurch gekennzeichnet, daß** der hydraulische Teil der elektromagnetischen Schaltventile (32, 33) zum Steuern des Gangeingriffbetätigungselements eine gemeinsame Kammer (50) aufweist, die mit der Entlastungsleitung (T) und den Kammern (40, 41) des Gangeingriffbetätigungselements verbunden ist, wobei die Kammer (50) kreisförmige Aufnahmen (63, 64) aufweist zum Steuern der Verbindung zwischen den beiden Kammern (40,41) und der Entlastungsleitung (T) in Abhängigkeit von der relativen Position, die erreicht wird durch ringförmige Vorsprünge (60, 61), die an wenigstens einem Spulenelement (52) ausgebildet sind, das in die Kammer (50) eingepaßt ist und durch die Elektromagneten der elektromagnetischen Ventile (32, 33) angetrieben wird.

5. Vorrichtung nach Anspruch 4, **dadurch gekennzeichnet, daß** es zwei Spulenelemente (52, 53) gibt, die getrennt durch ein elastisches Element (51), das zwischen den inneren Enden der Spulenelemente (52, 53) eingesetzt ist, in einem Abstand voneinander angeordnet sind.

## Revendications

1. Dispositif électro-hydraulique pour commander une boîte de vitesses mécanique à servo-actionneurs pour véhicule automobile, dans lequel un fluide sous pression est utilisé comme fluide de travail, le dispositif comprenant une commande hydraulique pour l'embrayage au moyen d'un actionneur et de deux actionneurs uniques, l'un pour sélectionner les pignons et l'autre pour engrener les pignons, lesdits actionneurs étant commandés par une unité de traitement électronique pour entraîner l'arbre de commande (11) de la boîte de vitesses en réponse à des signaux provenant d'un moyen capteur monté sur le véhicule, le circuit de commande de fluide sous pression destiné à mettre en oeuvre les actionneurs (10, 13) comprenant une première électrovanne proportionnelle (26) à trois voies à deux positions, disposée en amont d'un premier ensemble de deux électrovannes tout ou rien (27, 28), **caractérisé en ce qu'**une deuxième électrovanne proportionnelle (30) de pression est disposée en amont d'un deuxième ensemble de deux électrovannes tout ou rien (32, 33), et **en ce que** ladite première électrovanne proportionnelle (26) commande aussi l'actionneur (13) d'embrayage.

2. Dispositif selon la revendication 1, **caractérisé en ce que** les électrovannes proportionnelles commandent un flux d'entrée de fluide sous pression dans les électrovannes tout ou rien (27, 28, 32, 33) et un flux de sortie de ce fluide hors de celles-ci.

3. Dispositif selon la revendication 1, **caractérisé en ce que** la ligne de pression (P) d'entrée de flux entre l'électrovanne proportionnelle (30) et le corps (85) du deuxième ensemble d'électrovannes (32, 33) tout ou rien est une ligne unique, et **en ce qu'**un conduit (66) qui connecte ladite ligne à chaque électrovanne (32, 33) tout ou rien est ménagé à l'intérieur dudit corps (85).

4. Dispositif selon la revendication 1, **caractérisé en ce que** la partie hydraulique des électrovannes tout ou rien (32, 33) pour commander l'actionneur d'engrènement des pignons inclut une chambre commune (50) connectée à la ligne de décharge (T) et aux chambres (40, 41) dudit actionneur d'engrènement des pignons, ladite chambre (50) comportant des sièges circulaires (63, 64) pour commander la liaison entre lesdites deux chambres (40, 41) et ladite ligne de décharge (T) en fonction de la position relative atteinte par des saillies annulaires (60, 61) formées sur au moins un organe en forme de bobine (52) inséré dans ladite chambre (50) et entraîné par les électroaimants desdites électrovannes (32, 33).

5. Dispositif selon la revendication 4, **caractérisé en ce qu'**il existe deux organes en forme de bobines (52, 53), espacés par un organe élastique (51) qui est interposé entre les extrémités intérieures desdits organes en forme de bobines (52, 53).
